# EUROPEAN PATENT SPECIFICATION

(11) **EP 1 732 983 B1**
(45) Date of publication and mention of the grant of the patent: **03.09.2008**
(21) Application number: 05730975.9
(22) Date of filing: 24.03.2005
(51) Int. Cl.: C08L 53/02, C08F 297/04, C08J 3/075

(54) **THERMOPLASTIC GEL COMPOSITIONS THAT CAN BE CONVERTED INTO THERMOSET GEL COMPOSITIONS BY EXPOSURE TO RADIATION**
THERMOPLASTISCHE GELZUSAMMENSETZUNGEN, DIE DURCH BESTRAHLUNG IN DUROPLASTISCHE GELZUSAMMENSETZUNGEN UMGEWANDELT WERDEN KÖNNEN
COMPOSITIONS DE GEL THERMOPLASTIQUE POUVANT ETRE TRANSFORMEES EN COMPOSITIONS DE GEL THERMODURCISSABLE PAR EXPOSITION A UN RAYONNEMENT

(30) Priority: 25.03.2004 US 556448 P
(43) Date of publication of application: 20.12.2006
(73) Proprietor: KRATON Polymers Research B.V., 1030 BH Amsterdam (NL)
(72) Inventor: ST. CLAIR, David, J., Houston, TX 77079 (US)
(74) Representative: Kortekaas, Marcel C.J.A.
(86) International application number: PCT/US2005/009991
(87) International publication number: WO 2005/095513

(56) References cited:
- EP-A- 0 371 641
- US-A- 4 716 183
- US-A- 5 486 574

## Description

### BACKGROUND OF THE INVENTION

### 1. Field of the Invention

The present invention relates to gel compositions. The present invention particularly relates to gel compositions useful for preparing articles such as candles, air fresheners, gaskets, cushions, mattresses, pillows and the like.

### 2. Background of the Art

Gel compositions are well known in the art and are known to be useful in making many types of products. For the purposes of the present invention, a gel is a solid and rubbery material. Gels are useful for preparing articles such as clear oil gel candles, when combined with an oil, or air fresheners, when combined with a volatile solvent and a fragrance. Other applications of such gels are the formation of soft articles such as gaskets, cushions and toys.

U.S. Patent No. 5,879,694 to Fan discloses a transparent gel candle comprising hydrocarbon oil, and one or more triblock, radial block or multi-block copolymer of a thermoplastic rubber. Since gels of this type are thermoplastic, they have low viscosity at melt processing temperatures and so it is easy to mix them and form articles from them. However, one problem with using thermoplastic gels is that although they perform well when used at ambient temperatures, they can soften and distort or even flow when warmed. This can be a very costly defect if the gel is thermoplastic at temperatures found in, for example, a shipping container on a hot day or the engine compartment of an automobile. It would be desirable in the art of making such products to prepare them using gels that do not distort and flow at temperatures only somewhat above ambient.

It would also be desirable in the art of preparing products such as gel candles, air fresheners, gaskets, cushions (such as bicycle cushions, chair and sofa cushions and the like), mattresses, pillows and the like to maintain the easy processing characteristics of a thermoplastic gel but to improve the material so that it would not deform or flow at elevated temperatures.

### SUMMARY OF THE INVENTION

In one aspect, the present invention is a thermoplastic gel composition that can be converted into a thermoset gel composition by exposure to ionizing or non-ionizing radiation, the thermoplastic gel composition comprising: (a) from about 40 to about 5 weight percent of a crosslinkable block copolymer selected from the group consisting of hydrogenated and unhydrogenated styrene/diene block copolymers and diene/diene block copolymers; (b) from about 60 to about 90 weight percent of a component selected from the group consisting of extending oils, plasticizers and solvents; (c) from about 1 to about 20 weight percent of at least one crosslinker selected from the group consisting of difunctional or multifunctional acrylate or methacrylate monomers and vinyl ethers; (d) from 0 to about 10 weight percent of expandable microspheres; and (e) from 0 to about 3.0 weight percent of a photoinitiator, wherein the total of all components equals 100 weight percent; and component (b) is compatible with the crosslinkable block copolymer and a liquid at ambient temperature.

In another aspect, the present invention is a thermoset article comprising an article that is prepared from a thermoplastic gel composition that is converted into a thermoset gel composition by exposure to ionizing or non-ionizing radiation, the thermoplastic gel composition comprising: (a) from about 40 to about 5 weight percent of a crosslinkable block copolymer selected from the group consisting of hydrogenated and unhydrogenated styrene/diene block copolymers and diene/diene block copolymers; (b) from about 60 to about 90 weight percent of a component selected from the group consisting of extending oils, plasticizers and solvents; (c) from about 1 to about 20 weight percent of at least one crosslinker selected from the group consisting of difunctional or multifunctional acrylate or methacrylate monomers and vinyl ethers; (d) from 0 to about 10 weight percent of expandable microspheres; and (e) from 0 to about 3.0 weight percent of a photoinitiator; wherein the total of all components equals 100 weight percent; and component (b) is compatible with the crosslinkable block copolymer and a liquid at ambient temperature.

In yet another aspect, the present invention is a process for preparing a thermoset article comprising subjecting a thermoplastic article prepared from a thermoplastic gel composition that can be converted into a thermoset gel composition by exposure to ionizing or non-ionizing radiation, the thermoplastic gel composition comprising: (a) from about 40 to about 5 weight percent of a crosslinkable block copolymer selected from the group consisting of hydrogenated and unhydrogenated styrene/diene block copolymers and diene/diene block copolymers; (b) from about 60 to about 90 weight percent of a component selected from the group consisting of extending oils, plasticizers and solvents;(c) from about 1 to about 20 weight percent of at least one crosslinker selected from the group consisting of difunctional or multifunctional acrylate or methacrylate monomers and vinyl ethers; (d) from 0 to about 10 weight percent of expandable microspheres; and (e) from 0 to about 3.0 weight percent of a photoinitiator; wherein the total of all components equals 100 weight percent; and component (b) is compatible with the crosslinkable block copolymer and a liquid at ambient temperature, to ultraviolet light or electron beam radiation for a time and under conditions sufficient to convert the thermoplastic article to a thermoset article.

### DETAILED DESCRIPTION OF THE PREFERRED EMBODIMENTS

### COMPONENT (a)

The present invention is a thermoplastic gel composition that can be converted into a thermoset gel composition by exposure to ionizing or non-ionizing radiation. The compositions of the present invention include from about 40 to about 5 weight percent of a crosslinkable block copolymer selected from the group consisting of selectively hydrogenated and unhydrogenated styrene/diene block copolymers and diene/diene block copolymers, preferably from about 20 to about 10 weight percent. The block copolymers used may be linear triblock or multiblock copolymers or multi-armed or star shaped symmetrical or unsymmetrical block copolymers. Diblock copolymers may also be used, as well as mixtures of block copolymers such as triblock copolymers with diblock copolymers.

In one embodiment of the present invention, the block copolymers include unhydrogenated styrene butadiene block copolymers having the general formula:

(S-B)ₓ-Y-(B)_{y} (I)

wherein S is a styrene polymer block, B is a butadiene polymer block having a 1,2-vinyl content of between 10 and 80 mol percent, Y is a coupling agent residue, x is an integer from 2 to 20, y is an integer from 0 to 20 and wherein x+y ranges from 2 to 30. Preferably, the value of x is from 2 to 12, even more preferably 2 and the value of y is from 0 to 12, even more preferably 2. Such block copolymers are disclosed in U.S. Patent No. 5,777,039, The true molecular weight of the block copolymers of this embodiment will vary according to the end use, but may be in the range of from about 30 to about 1000 kg/mol and preferably in the range of from about 40 to about 250 kg/mol and more preferably in the range of from about 50 to about 150 kg/mol. The term "true molecular weight" as used herein refers to the molecular weight as determined from the peak of the GPC trace in kg/mol.

In the block copolymer of formula (I), the styrene content is preferably in the range of from about 10 to about 40 weight percent, more preferably from about 15 to about 30 weight percent. The block copolymer of formula (I) may be prepared by any method known in the art including the well known full sequential polymerization method, optionally in combination with reinitiation, or by a coupling method, as illustrated in e.g. U.S. Pat. No. 3,231,635; U.S. Pat. No. 3,251,905; U.S. Pat. No. 3,390,207; U.S. Pat. No. 3,598,887; U.S. Pat. No. 4,219,627; EP-A-0,413,294; EP-A-0,387,671; EP-A-0,636,654; and WO 04/22931. Coupling agents which can be used when a coupling method is used to make the block copolymers of the present embodiment are, for example, dibromoethane, silicon tetrachloride, diethyl adipate, divinylbenzene, dimethyldichlorosilane, methyldichlorosilane, although other coupling agents may be used. Particularly preferred in such a preparation route is the use of non-halogen containing coupling agents, such as gamma-glycidoxypropyl-trimethoxysilane or the diglycidylether of bisphenol A.

When the block copolymers of formula (I) are used in making the thermoplastic oil compositions of the present invention which contain expandable microspheres, preferably an additional polymer (a hydrogenated block copolymer which does not UV cure) is added to the composition. Said additional polymer is preferably a hydrogenated block copolymer having at least 90% hydrogenation (a hydrogenated polymer in which at least 90% of the 1,3-butadiene is hydrogenated to achieve block copolymers with ethylene/butylene blocks or block copolymers in which at least 90% of the isoprene is hydrogenated to achieve block copolymers with ethylene/propylene blocks). Said hydrogenated block copolymers preferably have a styrene content from about 5 to about 40, more preferably from about 15 to about 30. Examples of such polymers include, but are not limited to, polymers having general structures which contain at least one polystyrene block and at least one hydrogenated polybutadiene block, hydrogenated polyisoprene block or hydrogenated mixed block of polybutadiene and polyisoprene. Preferred commercially available hydrogenated block copolymers which may be used in the present invention in combination with the block copolymer of formula (I) include, but are not limited to, KRATON^{®} G polymers such as KRATON^{®} G1652, KRATON^{®} G1726, or KRATON^{®} G1657. When the block copolymer of formula (I) is used in combination with a hydrogenated block copolymer, the two are preferably used in a ratio from 3:1 to 1:3 (block copolymer of formula (I):hydrogenated block copolymer) such that the final amount of component (a) is from 5 to 40 weight percent of the thermoplastic gel composition. In the most preferred embodiment, the ratio is 2:1 to 1:2, even more preferably 1:1.

In another embodiment of the present invention, the block copolymers are selectively hydrogenated and are selected from:

(A-HD)ₓ₋Y-(UD)_{z} (II)

or

(UD-A-HD)ₓ-Y (III)

or

((UD)_{y}-A-HD)ₓ-Y-(UD)_{z} (IV)

wherein A is a vinyl aromatic hydrocarbon block having a molecular weight of from 4,000 to 30,000, HD is a hydrogenated conjugated diene block having a molecular weight of from 10,000 to 100,000, Y is a multifunctional coupling agent, UD is a conjugated diene block having a molecular weight of from 1,000 to 80,000 or a conjugated diene block having a molecular weight of from 1,000 to 80,000 which has been partially hydrogenated, x is an integer from 1 to 20, y is 0 or 1, z is an integer from 1 to 20 and in formulas (II) and (IV) x+z ranges from 2 to 30. Such block copolymers are disclosed in U.S. Patent No. 5,486,574, said patent incorporated herein by reference.

In formulas (II), (III) and (IV), the A blocks are polymer blocks of a vinyl aromatic hydrocarbon. Preferably, the vinyl aromatic hydrocarbon is styrene. Other useful vinyl aromatic hydrocarbons include, but are not limited to, alpha-methyl styrene, various alkyl-substituted styrenes, alkoxy-substituted styrenes, vinyl naphthalene, vinyl toluene and the like. The HD and UD blocks are polymer blocks of conjugated dienes. The preferred diene for the HD blocks is butadiene. Isoprene is preferred for the UD blocks. Other dienes may also be used, including, but not limited to, piperylene, methylpentadiene, phenylbutadiene, 3,4-dimethyl-1,3-hexadiene, 4,5-diethyl-1,3-octadiene and the like, preferably those conjugated dienes containing 4 to 8 carbon atoms. It is preferred that the conjugated diene employed in the HD block differ from that employed in the UD block, especially in respect to ease of selective hydrogenation.

The diene in the HD block should preferably hydrogenate faster and more completely than the diene in the UD block. As noted above, the UD block may be unhydrogenated or partially hydrogenated. When the UD block is partially hydrogenated, the amount of hydrogenation in the unsaturated (UD) blocks after the reaction may be such that the UD blocks are up to 90 percent saturated, i.e., contain at least 10 percent residual unsaturation. Preferably, at least 50 percent, most preferably from 50 up to 90 percent of the original unsaturation of the diene in the UD blocks remains after partial hydrogenation. Generally, the melt viscosity of these polymers is lowered when the residual unsaturation is increased.

The A-HD arms or blocks may be hydrogenated as generally described in the prior art, preferably so as to reduce at least 90 percent of any olefinic double bonds in the polymer chains. Suitably at least 50 percent, preferably at least 70 percent, and more preferably at least 90 percent, most preferably at least 95 percent of the original olefinic unsaturation in the A-HD arms is hydrogenated.

The dienes used in this invention preferably should be those which are largely amorphous at use temperatures (usually 10°C to 40°C) and do not contain excess crystallinity which would interfere with flexibility. For butadiene, e.g., the percent of 1,2 addition should preferably be 30 percent to 80 percent to prevent excessive crystallinity after hydrogenation to ethylene-butylene (EB) rubber.

An especially preferred embodiment of the present invention, is a thermoplastic oil composition in which the block copolymers are selected from:

(S-EB)ₓ-Y-(I)_{z} (V)

or

(I-S-EB)ₓ-Y (VI)

or

((I)_{y}-S-EB)ₓ-Y-(I)_{z} (VII)

wherein S is a polystyrene block, EB is a hydrogenated polybutadiene polymer block [a poly(ethylene/butylene) block] wherein the 1,2-vinyl content of the butadiene polymer block prior to hydrogenation is between 30 and 80 mol percent, I is a polyisoprene polymer block or a polyisoprene polymer block which has been partially hydrogenated, Y is a coupling agent residue, x is an integer from 1 to 20, preferably from 2 to 12, y is 0 or 1, z is an integer from 1 to 20, preferably from 2 to 12, and in formulas (V) and (VII) x+z ranges from 2 to 30. Even more preferable embodiments of the present invention are those embodiments in which block copolymers of the formula (V), (VI) or (VII) are utilized in which the value of x is 2 and the value of z is 2. In this embodiment, hydrogenation of the polybutadiene block to form the poly(ethylene/butylene) block is carried out under conditions that are selective for polybutadiene reaction and essentially exclude most, if not all, of the hydrogenation of the isoprene block.

The polymers of formulas (II) to (VII) generally have an A block content (polystyrene content when A is styrene) of from 4 to 35 percent, preferable from 12 to 25 percent. These polymers preferably have a molecular weight of from 35,000 to 300,000. The A blocks have a molecular weight of from 4,000 to 20,000. The HD blocks should have a molecular weight of from 10,000 to 100,000. The UD blocks should have a molecular weight from 1,000 to 80,000.

Molecular weights of linear polymers or unassembled linear segments of polymers such as mono-, di-, triblock, etc., arms of star polymers before coupling are conveniently measured by Gel Permeation Chromatography (GPC), where the GPC system has been appropriately calibrated. For anionically polymerized linear polymers, the polymer is essentially monodispersed and it is both convenient and adequately descriptive to report the "peak" molecular weight of the narrow molecular weight distribution observed. The peak molecular weight is usually the molecular weight of the main species shown in the chromatograph. For materials to be used in the columns of the GPC, styrene-divinyl benzene gels or silica gels are commonly used and are excellent materials. Tetrahydrofuran is an excellent solvent for polymers of the type described herein. Ultraviolet or refractive index detectors may be used.

Measurement of the true molecular weight of a coupled star polymer is not as straightforward or as easy to make using GPC. This is because the star shaped molecules do not separate and elute through the packed GPC columns in the same manner as do the linear polymers used for the calibration, and, hence, the time of arrival at a UV or refractive index detector is not a good indicator of the molecular weight. A good method to use for a star polymer is to measure the weight average molecular weight by light scattering techniques. The sample is dissolved in a suitable solvent at a concentration less than 1.0 gram of sample per 100 milliliters of solvent and filtered using a syringe and porous membrane filters of less than 0.5 microns pore size directly into the light scattering cell. The light scattering measurements are performed as a function of scattering angle and of polymer concentration using standard procedures. The differential refractive index (DRI) of the sample is measured at the same wavelength and in the same solvent used for the light scattering. The following references are relating to the hereinbefore described analysis methods:
1. Modern Size-Exclusion Liquid Chromatography, W. W. Yau, J. J. Kirkland, D. D. Bly, John Wiley & Sons, New York, NY, 1979.
2. Light Scattering from Polymer Solution, M. B. Huglin, ed., Academic Press, New York, NY, 1972.
3. W. Kaye and A. J. Havlik, Applied Optics, 12, 541 (1973).
4. M. L. McConnell, American Laboratory, 63, May, 1978.

The preferred method for making the block copolymers of formulas (II)-(VII) of the present embodiment is basically described in European Patent Application 0,314,256, disclosed herein by reference, although any of the methods known in the art such as U.S. Pat. No. 3,231,635; U.S. Pat. No. 3,251,905; U.S. Pat. No. 3,390,207; U.S. Pat. No. 3,598,887; U.S. Pat. No. 4,219,627; EP-A-0,413,294; EP-A-0,387,671; EP-A-0,636,654; and WO 04/22931, may be utilized. European Patent Application 0,314,256 discloses a two-step process for producing asymmetric radial polymers which avoids the problem of the production of the unwanted homopolydiene polymer. The process involves separately polymerizing the monomers to create separately the two different types of arms. Then one of the polymeric arms is coupled to the coupling agent and when that coupling reaction is complete, the second set of polymer arms is coupled to the coupling agent.

This ensures that there will be very little homopolydiene in the final polymer. In the present invention, for example, isoprene arms would be anionically polymerized, and coupled via the coupling agent. Subsequently or in parallel, styrene-butadiene (SB) arms would be anionically polymerized and at least 2 arms then coupled to the isoprene arms via the coupling agent. These unhydrogenated precursors suffer the stability problems common to polymers with a high degree of unsaturation (for example, (SB)₂-Y-I₂)). Subsequently, the coupled polymer is hydrogenated under conditions that preferably hydrogenate the poly(diene) of the A-HD arm (or block) only, leaving the poly(diene) of the UD arm (or block) essentially unsaturated.

In general, the method described is used to prepare asymmetric radial or star polymers with any polymer containing a reactive end group which will react with one or more functional groups contained in the selected coupling agent. The method is particularly suitable for the preparation of asymmetric radial polymers from so-called "living" polymers containing a single terminal metal ion. As is well known in the prior art, "living" polymers are polymers containing at least one active group such as a metal atom bonded directly to a carbon atom. "Living" polymers are readily prepared via anionic polymerization. Since the present invention is particularly well suited to the preparation of asymmetric radial polymers using "living" polymers to form the arms thereof, the invention will be described by reference to such polymers. It will, however, be appreciated that the invention would be equally useful with polymers having different reactive groups so long as the selected coupling agent contains functional groups which are reactive with the reactive site contained in the polymer.

Living polymers containing a single terminal group are, of course, well known in the prior art. Methods for preparing such polymers are taught, for example, in U.S. Patents Nos. 3,150,209; 3,496,154; 3,498,960; 4,145,298 and 4,238,202. Methods for preparing block copolymers such as those preferred for use in the method of the present invention are also taught, for example, in U.S. Patent Nos. 3,231,635; 3,265,765 and 3,322,856. When the living polymer product is a random or tapered copolymer, the monomers are, generally, added at the same time, although the faster reacting monomer may be added slowly in some cases, while, when the product is a block copolymer, the monomer used to form the separate blocks are added sequentially.

In general, the polymers useful as arms in the asymmetric radial polymers of this invention may be prepared by contacting the monomer or monomers with an organoalkali metal compound in a suitable solvent at a temperature within the range from -150°C to 300°C, preferably at a temperature within the range from 0° C to 100°C. Particularly effective polymerization initiators are organolithium compounds having the general formula RLi wherein R is an aliphatic, cycloaliphatic, alkyl-substituted cycloaliphatic, aromatic or alkyl-substituted aromatic hydrocarbon radical having from 1 to 20 carbon atoms.

In general, the living polymers used as arms in the asymmetric radial polymer will be contacted with the coupling agent at a temperature within the range from 0°C to 100°C at a pressure within the range from 0 bar to 7 bar and the contacting will be maintained until reaction between the arms and the coupling agent is complete or at least substantially completed, generally for a period of time within the range from 1 to 180 minutes.

In general, the living polymers useful as arms in the asymmetric radial polymers of this embodiment will be in solution when contacted with the coupling agent. Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane, heptane and the like, cycloaliphatic hydrocarbons such as cyclohexane, cyclopentane, cycloheptane and the like, alkyl-substituted cycloaliphatic hydrocarbons such as methylcyclohexane, methylcycloheptane and the like, aromatic hydrocarbons such as benzene and the alkyl-substituted aromatic hydrocarbons such as toluene, xylene and the like and ethers such as tetrahydrofuran, diethylether, di-n-butyl ether and the like. Since the polymers useful in making the asymmetric radial polymers of this invention will contain a single terminal reactive group, the polymers used in preparation of the asymmetric radial polymers will be retained in solution after preparation without deactivating the reactive (living) site. In general, the coupling agents may be added to a solution of the polymer or a solution of the polymer may be added to the coupling agent.

Any of the coupling agents known in the prior art to be useful in forming a radial polymer by contacting the same with a living polymer may be used in preparing the asymmetric radial polymers of this invention. Suitable coupling agents will contain three or more functional groups which will react with the living polymer at the metal-carbon bond. While the method of the present invention will improve the relative distribution of different arms in an asymmetric radial polymer having any number of arms, the method is very effective when the coupling agent contains from three to about twenty functional groups reactive with the metal-carbon bond of the "living" polymer. Suitable coupling agents, then include SiX₄, RSiX₃, HSiX₃, X₃ Si-SiX₃, RX₂ Si-(CH₂ₓ) -SiX₂ R, RX₂ Si(CH₂)ₓ-SiX₂-(CH₂)ₓ-SiX₂R, X₃Si-(CH₂)ₓ-SiX₃, R-C(SiX₃)₃, R-C(CH₂SiX₃)₃, C(CH₂SiX₃)₄ and the like, particularly those containing from three to about six functional groups. In the foregoing formula: each X may, independently, be fluorine, chlorine, bromine, iodine, alkoxide radicals, carboxylate radicals, hydride and the like; R is a hydrocarbyl radical having from 1 to about 10 carbon atoms, preferably from 1 to about 6 carbon atoms; and x is a whole number from 1 to about 6. Particularly useful coupling agents include the silicon tetrahalides such as silicon tetrafluoride, silicon tetrachloride, silicon tetrabromide and the like, and bis(trihalo)silanes such as bis(trihalo)silylethane and hexahalodisilane where the halogen may be fluorine, chlorine, bromine, or iodine.

The coupling process per se is described in detail in U.S. Patent 4,096,203, which is incorporated herein by reference. Specific multifunctional coupling agents useful herein are described in that patent but there are other coupling agents which may also be useful herein.

Star polymers are made by coupling polymer arms using a polyfunctional coupling agent or coupling monomer. A preferred coupling agent is a polyalkenyl aromatic coupling agent such as those described in U.S. Patent Nos. 4,010,226, 4,391,949 and 4,444,953 U.S. Patent 5,104,921 contains a complete description of such polyalkenyl aromatic compounds at columns 12 and 13. Divinyl aromatic hydrocarbons containing up to 26 carbon atoms per molecule are preferred and particularly divinyl benzene in either its meta, or para isomer and commercial divinyl benzene which is a mixture of said isomers is also quite satisfactory. The coupling agent is preferably added to the living polymer after the polymerization is substantially complete. The amount of coupling agent varies between wide limits but preferably at least one equivalent is used per equivalent of unsaturated living polymer to be coupled. The coupling reaction is generally carried out in the same solvent as for the polymerization reaction. The temperature varies between wide limits, for example, from 25°C to 95°C.

The hydrogenation of these copolymer arms may be carried out by a variety of well established processes including hydrogenation in the presence of such catalysts as Raney Nickel, noble metals such as platinum, palladium and the like and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the present of a soluble hydrogenation catalyst. Such processes are disclosed in U.S. Patent Nos. 3,113,986, 4,226,952 and Reissue 27,145. The polymers are hydrogenated in such a manner as to produce hydrogenated polymers having a residual unsaturation content in the HD polydiene block of less than about 20 percent, and preferably as close to 0 percent as possible, of their original unsaturation content prior to hydrogenation while the polydiene portion of the UD blocks contains at least 10 percent residual unsaturation and preferably at least 50 percent. A titanium catalyst such as disclosed in U.S. Patent 5,039,755, may also be used in the hydrogenation process.

### COMPONENT (b)

The thermoplastic gel composition comprises from about 60 to about 90 weight percent of a component selected from the group consisting of extending oils, plasticizers and solvents. The selection of which of these extending oils, plasticizers and solvents to use is a function of the end use intended for the composition. For example, when the end use is a candle, an extending oil would be used. If the end use is a gasket or toy, a plasticizer is often used. If the end use is an air freshener, a volatile solvent and a fragrance would be used.

Extending oils used to make articles of the present invention preferably are hydrocarbon oils. Preferred extending oils are the white mineral oils such as the DRAKEOL^{®} oils sold by Penreco, Karns City, PA, and the TUFFLO^{®} oils sold by Citgo, Tulsa, OK. Low aromatic content paraffinic / naphthenic process oils are also satisfactory, such as the SHELLFLEX^{®} oils sold by Shell, Houston, TX, and the CALSOL^{®} oils sold by Calumet. Synthetic oils such as the poly-alpha-olefin oils, polypropylene oils, polybutene oils and the like are also suitable. Any extending oil that is compatible with the block copolymers of the present invention, liquid at ambient temperatures, and known to be useful to those of ordinary skill in the art of preparing the subject article can be used with the present invention.

A wide variety of plasticizers can be used to make articles of the present invention. Suitable plasticizers can be synthetic esters, ethers or alcohols, as well as naturally occurring fats and oils. Such plasticizers include the JAYFLEX^{®} branched alkyl ester plasticizers sold by Exxon, Houston, TX, and the BENZOFLEX^{®} benzoate esters sold by Velsicol, Rosemont, IL. Avery complete list of suitable plasticizers is given in US Patent Application Publication 2002/0055562 A1. Any plasticizer that is compatible with the block copolymers of the present invention, liquid at ambient temperatures, and known to be useful to those of ordinary skill in the art of preparing the subject article can be used with the present invention.

Solvents can also be used to prepare articles of the present invention. The selection of solvent will also vary according to the end use of the article. The solvent can function as a plasticizer, but preferably it is a volatile compound that slowly emerges from the gel and performs a function such as masking unpleasant odors or killing or repelling insects. Solvents useful with the present invention can also be volatile hydrocarbon solvents or oxygenated solvents such as esters, ethers or alcohols which evaporate slowly and aid in the release of a functional additive such as an insect repellant or a perfume. Any solvent that is compatible with the block copolymers of the present invention, liquid at ambient temperatures, and known to be useful to those of ordinary skill in the art of preparing the subject article can be used with the present invention.

As noted above, the extending oils, plasticizers and solvents will be present in the gel composition of the present invention in an amount from about 60 to about 90 weight percent, preferably from about 80 to about 90 weight percent.

### COMPONENT (c)

The compositions of the present invention also include from about 1 to about 20 weight percent of at least one crosslinker selected from the group consisting of difunctional or multifunctional acrylate or methacrylate monomers such as those supplied by Sartomer, Exton, PA, and vinyl ethers such as those supplied by BASF, Mount Olive, NJ. Particularly preferred crosslinkers for use with the present invention are hexane diol diacrylate and the alkoxylated hexane diol diacrylate.

### COMPONENT (d)

In those instances where it is desired to prepare gels of lower density, another component of the present invention that can be added to achieve this end is expandable microspheres, such as the EXPANCEL^{®} expandable microspheres available from Akzo Nobel. When added, these expandable microspheres are preferably present in the thermoplastic gel composition in an amount from about 0.1 to about 10 weight percent, preferably in an amount from about 1 to about 5 weight percent. The expandable microspheres generally consist of a polymer shell encapsulating a gas or vaporizable liquid. When the gas inside the shell is heated, it increases its pressure and the thermoplastic shell softens, resulting in a dramatic increase in the volume of the microspheres. When fully expanded, the volume of the microspheres may increase more than 40 times their original volume. Prior to expansion, the density of such polymeric microspheres may range from 1.0 to 1.3 gm/cc. The expansion temperature of such polymeric microspheres may range from about 60°C to about 200°C. The density of the expandable microspheres drops to about 0.05 gm/cc after expansion. To prevent these expanded, low density microspheres from merely separating to the top during expansion, it is required that the gel have enough integrity to prevent this separation. By crosslinking the gel with the polymers and crosslinkers of the present invention, separation of the expanding microspheres is inhibited.

### COMPONENT (e)

If the thermoplastic compositions of the present invention are to be converted to thermoset compositions by exposure to ultraviolet light, then it is necessary to include a photoinitiator in the formulation at a concentration of from 0.1 to 3.0 weight percent. Useful photoinitiators include:
• benzoin ethers, such as benzoin methyl ether and benzoin isopropyl ether;
• substituted acetophenones and benzophenones such as diethoxyacetophenone and DAROCURE^{™} BP sold by Ciba, Tarrytown, NY;
• benzyldimethyl ketal such as IRGACURE^{®} 651 sold by Ciba;
• alpha hydroxyketones such as IRGACURE^{®} 184 sold by Ciba; and
• bis acyl phosphine oxides such as IRGACURE^{®} 819 sold by Ciba.
The bis acyl phosphine oxide type photoinitiators are particularly preferred for crosslinking compositions of the present invention by exposure to ultraviolet light.

The thermoplastic compositions of this invention may be cured by exposure to a wide variety of electromagnetic radiation sources. Either ionizing radiation such as alpha, beta, gamma, X-rays and high energy electrons or non-ionizing radiation such as ultraviolet, visible, infrared, microwave and radio frequency may be used. Electron beam, ultraviolet and visible radiation sources are preferred.

Electron beam equipment may be of the high voltage type in which a focused, high energy beam of electrons is scanned across the composition to be cured or of the low energy type in which a curtain of electrons passes through a window of a linear cathode electron beam tube and the composition is passed beneath the curtain. Manufacturers of high voltage electron-accelerator equipment are High Voltage Engineering Corporation, Burlington, Mass. and Radiation Dynamics, Inc., Westbury, N. Y. Manufacturers of low energy electron beam generating equipment include American International Technologies, Inc., of Torrance, California; RPC Industries of Hayward, California; and Energy Sciences of Wilmington, Massachusetts.

Sources of ultraviolet light may also be of the high intensity type using lamps in the 200 to 300 watt/inch range or of the low intensity type using lamps in the 5 to 20 watt/inch range. A discharge is placed across the lamps, either through electrodes on either ends of the tubes or by microwave irradiation, generating a plasma within the lamp. The material inside the lamp determines the wavelength of emission from the lamp and the type of lamp can be chosen so the radiation emitted from the lamp matches the absorption characteristics of the photoinitiator. High intensity ultraviolet equipment is available from, for example, Fusion Systems Inc., Gaithersburg, MD. Low intensity ultraviolet equipment is available from, for example, Ultra-Violet Products, Los Angeles, CA.

Radiation in the visible region can also be obtained from the same type of equipment used to generate ultraviolet radiation simply by using lamps which contain the appropriate material. Fluorescent lamps, tungsten halide lamps and visible lasers may also be utilized.

The compositions of the present invention can additionally have up to 20 weight percent of one or more supplemental components selected from the group consisting of stabilizers, pigments, dyes, blowing agents, foaming agents, fragrances and tackifying resins. Any additive known to be useful to those of ordinary skill in the art of preparing articles using gels can be used with the present invention.

The components of the thermoplastic compositions of the present invention can be combined and mixed to form the thermoplastic compositions in anyway known to be useful to those of ordinary skill in the art of forming thermoplastic gels. Generally, the components are admixed at a temperature which is high enough to allow easy mixing and for a period of time long enough to form a homogeneous composition and then the composition is cooled to room temperature forming the thermoplastic gel. If necessary, an excess of solvent can be used and then removed by stripping at an elevated temperature.

The thermoplastic compositions of the present invention can be fabricated into articles by any process known to be useful to those of ordinary skill in the art of preparing such articles. Such processes include, but are not limited to molding, pouring, extruding, and the like.

While not wishing to be bound to any theory, it is never the less believed that the crosslinking of the polymer by the crosslinking agent serves to convert the thermoplastic compositions to thermoset compositions. Once converted, the thermoset compositions of the present invention can be used at comparatively high temperatures without deforming or running, making these compositions desirable for the claimed applications as well as other gel applications where these properties would be advantageous.

### EXAMPLES

The following examples are provided to illustrate the present invention. The examples are not intended to limit the scope of the present invention and they should not be so interpreted. Amounts are in weight parts or weight percentages unless otherwise indicated.

Three polymers are used to demonstrate the invention. Polymer A is of the type described in U.S. Patent No. 5,777,039. Polymer A is an (S-B)₂-Y-B₂ where S is a polystyrene block, B is a polybutadiene block having a 1,2-vinyl content is 55% and Y is a coupling agent residue. Polymers B and C are of the type described in U.S. Patent No. 5,486,574. Polymer B is an (S-EB)₂-Y-(I)₂ where S is a polystyrene block, EB is a nearly completely hydrogenated polybutadiene block having a 1,2-vinyl content of 40%, I is a partially hydrogenated polyisoprene block and Y is a coupling agent residue. Polymer C is an (I-S-EB)₂-Y where I, S, EB and Y have the same meaning as for Polymer B. The polymers are characterized in Table 1.

**Table 1**

| | Polymer A | Polymer B | Polymer C |
|---|---|---|---|
| Polymer Type | (S-B)₂-Y-(B)₂ | (S-EB)₂-Y-(I)₂ | (I-S-EB)₂-Y |
| Weight Percent | | | |
| % S | 17 | 18 | 20 |
| % B | 83 | | |
| % EB | | 46 | 44 |
| % I | | 36 | 36 |
| Molecular Weight, kg/mol | | | |
| S Block | 15 | 10 | 10 |
| B Block | 40 | | |
| EB Block | | 25 | 21 |
| I Block | | 20 | 18 |
| Coupling Efficiency, % | 90 | 92 | 84 |
| Viscosity @ 25%, cps | 2000 | | |
| Viscosity @ 20%, cps | | 570 | 1300 |

The other ingredients used in the examples are identified as follows:

| Ingredient | Supplier | Description |
|---|---|---|
| KRATON G1652 | KRATON | S-EB-S Polymer, 30% w Polystyrene |
| Drakeol 7 | Penreco | White mineral oil, 11 centistokes @ 40°C |
| Irganox 1010 | Ciba | Hindered phenol type antioxidant |
| Irgacure 651 | Ciba | Benzyldimethyl-ketal type photoinitiator |
| Irgacure 819 | Ciba | Bis Acyl Phosphine Oxide type photoinitiator |
| SR238 | Sartomer | Hexanediol diacrylate crosslinker |
| CD560 | Sartomer | Alkoxylated hexanediol diacrylate crosslinker |

### Expancel DU091/80 Akzo Nobel Expandable microspheres

Sample preparation - The gels were mixed with a Silverson rotor / stator mixer at 130°C. The polymer and antioxidant were dissolved in the oil first by mixing for about 1 hour. The photoinitiator and the diacrylate monomer crosslinker were then added and mixing continued for another 5 minutes before preparing test samples. Films about 0.6 cm thick were made by pouring about 60 grams of gel into a 10x10 cm release paper boat. Plugs about 3.3 cm diameter x 4.3 cm high were made by pouring 60 ml of gel into a polypropylene cup. The films and plugs were removed from their containers and irradiated with an ULTRA-VIOLET PRODUCTS Model CL-1000 irradiation unit equipped with five 8-watt UV bulbs (F8T5BL 8 W Black Light) for various time periods, from 30 seconds to 10 minutes. Some samples were also exposed to fluorescent room lights for up to 1 week.

Tests - Three tests were used to assess the extent of crosslinking (although not all tests were used on all samples).

Crosslinked Gel - In this test, a piece of the 0.6 cm thick film of gel was suspended over a jar for 1 hr at 100°C and the fraction of the gel which melted to the bottom of the jar was measured. Initially, an 8.8 x 1.3 cm strip was squeezed between wooden tongue depressors and suspended over the jar. Later, the test was changed and a 2.5 cm diameter disk of the film supported on a 5 mesh screen was placed on top of the jar. If the gel was uncrosslinked, nearly 100% of the gel melted and dropped into the jar (Crosslinked Gel = 0%). If the gel was cured through its entire thickness, none of the gel melted (Crosslinked Gel = 100%). It was found, especially with IRGACURE 651, that some gels had a cure gradient; the side facing the UV lamps was tightly cured and the back side remained uncured.

Gel in Toluene - In this test, a piece of the 0.6 cm thick film of gel was soaked in toluene overnight and the appearance of the gel was rated qualitatively. If the sample was not crosslinked at all, there would be no gel in the toluene. If the sample was well cured, the gel swollen with toluene would have a nice, spongy, smooth appearance. If the gel had a cure gradient, the swollen gel would curl since the surface facing the lamps is tightly cured and so can swell only a little while the back side is only lightly cured and so it can swell at lot.

Plug Distortion - In this test, the 3.3 cm diameter plug was placed in a beaker with the unirradiated end up, the beaker was placed in an oven for 1 hr at 70°C and the distortion of the plug was rated as melted, severe, slight or none. If the gel was uncured, the plug melted and flowed level on the bottom of the beaker. Sometimes there was severe distortion where the plug flowed badly but did not melt completely. Other times there was only slight distortion where the plug simply got a little fatter around the middle. If the gel was well cured, there was no distortion of the plug at all and distortion was rated as none.

### Examples A, B and 1 - 4

Table 2 shows the crosslinking behavior of Polymer A. Samples A and B fall outside the scope of this invention. Sample A, containing no photoinitiator or acrylic monomer, does not crosslink upon irradiation for up to 10 minutes and so it simply melts at 100°C and self-levels on the bottom of the jar and it dissolves when soaked in toluene. Sample B crosslinks somewhat upon exposure to UV radiation but the Crosslinked Gel contents are low. Samples 1-4 fall within the scope of this invention. Samples 1 - 4 show that formulations containing both the photoinitiator and acrylic monomer crosslink, so more than half of the gel remains unmelted in the Crosslinked Gel content test.

**Table 2**

| Composition, %w | A | B | 1 | 2 | 3 | 4 |
|---|---|---|---|---|---|---|
| Drakeol 7 | 79.9 | 77.9 | 76.9 | 75.4 | 72.9 | 77.9 |
| Polymer A | 20.0 | 20.0 | 20.0 | 20.0 | 20.0 | 20.0 |
| Irganox 1010 | 0.1 | 0.1 | 0.1 | 0.1 | 0.1 | 0.1 |
| Irgacure 651 | | 2.0 | 2.0 | 2.0 | 2.0 | 1.0 |
| Sartomer SR238 | | | 1.0 | 2.5 | 5.0 | 1.0 |
| Crosslinked Gel,% after irradiation for | | | | | | |
| 2 minutes | | 7 | 31 | 36 | 32 | 42 |
| 5 minutes | 8 | 27 | 41 | 42 | 42 | 59 |
| 10 minutes | 10 | 27 | 54 | 52 | 53 | 65 |
| Gel in Toluene after irradiation for | | | | | | |
| 2 minutes | | flat | flat | curled | curled | flat |
| 5 minutes | none | flat | sl curl | curled | curled | sl curl |
| 10 minutes | none | flat | sl curl | curled | curled | sl curl |

### Examples 5 - 9

Results in Table 3 show that IRGACURE 819 is even more effective than IRGACURE 651 as a photoinitiator. The Crosslinked Gel content of samples 5 - 8 is very high and the Plug Distortion is only very slight or none. For sample 9, the Crosslinked Gel content is lower and Plug Distortion is slight, showing that 0.1 weight percent of IRGACURE 819 is about the minimum needed to crosslink the gel.

**Table 3**

| Composition, %w | 5 | 6 | 7 | 8 | 9 |
|---|---|---|---|---|---|
| Drakeol 7 | 76.9 | 77.9 | 78.4 | 78.7 | 78.8 |
| Polymer A | 20.0 | 20.0 | 20.0 | 20.0 | 20.0 |
| Irganox 1010 | 0.1 | 0.1 | 0.1 | 0.1 | 0.1 |
| Irgacure 819 | 2.0 | 1.0 | 0.5 | 0.2 | 0.1 |
| Sartomer SR238 | 1.0 | 1.0 | 1.0 | 1.0 | 1.0 |
| Crosslinked Gel,% after irradiation for | | | | | |
| 0.5 minute | 96 | 100 | 95 | - | 51 |
| 1 minute | 92 | 95 | 99 | - | 33 |
| 2 minutes | 92 | 96 | 99 | 89 | 51 |
| Gel in Toluene after irradiation for | | | | | |
| 0.5 minute | flat | flat | 2 layers | nice | loose |
| 1 minute | flat | flat | 2 layers | nice | thin |
| 2 minutes | flat | flat | 2 layers | nice | thin |
| Plug Distortion after irradiation for | | | | | |
| 0.5 minute | v slight | none | none | none | slight |
| 1 minute | v slight | v slight | none | none | slight |
| 2 minutes | v slight | none | none | none | slight |

### Examples 10-12

Comparison of results on samples 7 - 9 in Table 3 with results on samples 10 - 12 in Table 4 shows the performance of hexane diol diacrylate, Sartomer SR238, is very close to the performance of the alkoxylated hexane diol diacrylate, Sartomer CD560.

**Table 4**

| | | | |
|---|---|---|---|
| Composition, %w | 10 | 11 | 12 |
| Drakeol 7 | 78.4 | 78.7 | 78.8 |
| Polymer A | 20.0 | 20.0 | 20.0 |
| Irganox 1010 | 0.1 | 0.1 | 0.1 |
| Irgacure 819 | 0.5 | 0.2 | 0.1 |
| Sartomer CD560 | 1.0 | 1.0 | 1.0 |
| Crosslinked Gel,% after irradiation for | | | |
| 0.5 minute | 98 | 97 | 50 |
| 1 minute | 97 | 98 | 29 |
| 2 minutes | 97 | 97 | 96 |
| Gel in Toluene after irradiation for | | | |
| 0.5 minute | nice | - | loose |
| 1 minute | nice | 2 layers | thin |
| 2 minutes | nice | 2 layers | thin |
| Plug Distortion after irradiation for | | | |
| 0.5 minute | none | none | none |
| 1 minute | none | none | none |
| 2 minutes | none | none | none |

### Examples 13-16

Results in Table 5 show the effectiveness of the partially hydrogenated polymers. Results show that both polymers at either 10 or 20 weight percent in the oil gel crosslink well to give high Crosslinked Gel contents and nice gel structure when swollen in toluene.

**Table 5**

| | | | | |
|---|---|---|---|---|
| Composition, %w | 13 | 14 | 15 | 16 |
| Drakeol 7 | 84.4 | 74.4 | 84.4 | 74.4 |
| Polymer B | 10.0 | 20.0 | | |
| Polymer C | | | 10.0 | 20.0 |
| Irganox 1010 | 0.1 | 0.1 | 0.1 | 0.1 |
| Irgacure 819 | 0.5 | 0.5 | 0.5 | 0.5 |
| Sartomer SR238 | 5.0 | 5.0 | 5.0 | 5.0 |
| Crosslinked Gel,% after irradiation for | | | | |
| 0.5 minute | 74 | 60 | 97 | 100 |
| 1 minute | 74 | 71 | 99 | 100 |
| 2 minutes | 74 | 73 | 100 | 100 |
| Gel in Toluene after irradiation for | | | | |
| 0.5 minute | nice | nice | nice | nice |
| 1 minute | nice | nice | nice | nice |
| 2 minutes | nice | nice | nice | nice |

### Examples 17 -19

Table 6 shows the effect of IRGACURE 819 concentration in gels based on the partially hydrogenated polymer. Results show samples 17 - 19 all crosslinked well to give high Crosslinked Gel content and give a nice gel structure when swollen in toluene. There is a small increase in Plug Distortion as the photoinitiator concentration is reduced.

**Table 6**

| | | | |
|---|---|---|---|
| Composition, %w | 17 | 18 | 19 |
| Drakeol 7 | 73.9 | 74.4 | 74.7 |
| Polymer C | 20.0 | 20.0 | 20.0 |
| Irganox 1010 | 0.1 | 0.1 | 0.1 |
| Irgacure 819 | 1.0 | 0.5 | 0.2 |
| Sartomer SR238 | 5.0 | 5.0 | 5.0 |
| Crosslinked Gel,% after irradiation for | | | |
| 0.5 minute | 100 | 100 | 49 |
| 1 minute | 100 | 100 | 80 |
| 2 minutes | 100 | 100 | 98 |
| Gel in Toluene after irradiation for | | | |
| 0.5 minute | nice | nice | nice |
| 1 minute | nice | nice | nice |
| 2 minutes | nice | nice | nice |
| Plug Distortion after irradiation for | | | |
| 0.5 minute | none | v slight | slight |
| 1 minute | none | v slight | slight |
| 2 minutes | none | v slight | slight |

### Examples 20 - 24

Table 7 shows the importance of UV curing an oil gel to prepare low density oil gels using expandable microspheres. These gels were prepared by mixing the polymers and antioxidant into the oil with a Silverson mixer for about 1 hour at 130 °C. The expandable microspheres were added and mixed for about 5 minutes. The crosslinker and photoinitiator were then added and mixed for another 5 minutes before test samples were prepared. It is important to mix the expandable microspheres into the gel at a temperature below the temperature at which their shell softens and they expand, which in the present examples is about 165 °C. In the present examples, the compositions were poured hot from the mixer at 130 °C into molds to make films about 12.5 mm thick. The gels were exposed to UV-A lamps for 5 minutes. They were then heated to 175 °C for 15 minutes to expand the microspheres. Thickness was measured before and after heating and the percent increase in thickness was calculated.

Results in Table 7 show that the uncrosslinked gel, sample 20 simply melted when heated to 175 °C to expand the microspheres. Sample 21 was so tightly cured that it split apart into two pieces when the microspheres expanded. In sample 22, the degree of cure was limited by using a 50/50 blend of KRATON G1652, which does not UV cure, and Polymer A, which does UV cure. Results show the gel expanded by 27% when heated to expand the microspheres. Sample 23, using a 75/25 blend of the unreactive / reactive polymers did not cure enough so it also melted when heated to 175 °C. Sample 24 shows the gel with Polymer C expanded by 20% when heated.

**Table 7**

| | | | | | |
|---|---|---|---|---|---|
| Composition, %w | 20 | 21 | 22 | 23 | 24 |
| Drakeol 7 | 82.7 | 82.7 | 82.7 | 82.7 | 82.4 |
| KRATON G1652 | 15.0 | | 7.5 | 12.0 | |
| Polymer A | | 15.0 | 7.5 | 3.0 | |
| Polymer C | | | | | 15.0 |
| Irganox 1010 | 0.1 | 0.1 | 0.1 | 0.1 | 0.1 |
| Irgacure 819 | | 0.2 | 0.2 | 0.2 | 0.5 |
| Sartomer SR238 | | 1.0 | 1.0 | 1.0 | 1.0 |
| Expancel DU091/80 | 1.0 | 1.0 | 1.0 | 1.0 | 1.0 |
| Height Increase, % | melted | broke | 27 | melted | 20 |

### Examples 25 - 27

Table 8 shows UV cured oil gels with a higher concentration of expandable microspheres. These gels were prepared the same as in Examples 20 - 24 except the test samples were 3.3 cm diameter, 3 cm high plugs. The plugs were cured by exposure to fluorescent room light for 1 week. The cured gels were heated for 30 minutes at 165 °C to expand the microspheres. When expanded, the plugs maintained their shape but just got bigger. Cubes were cut from the plugs, their dimensions and weights were measured and their density was calculated.

The density calculated for the unexpanded gel is about 0.86 gm/cc. Results in Table 8 show that the expanded gels have densities reduced by about 40%.

**Table 8**

| | | | |
|---|---|---|---|
| Composition, %w | 25 | 26 | 27 |
| Drakeol 7 | 86.2 | 86.2 | 76.2 |
| KRATON G1652 | 6.7 | 5.0 | 10.0 |
| Polymer A | 3.3 | 5.0 | 10.0 |
| Irganox 1010 | 0.1 | 0.1 | 0.1 |
| Irgacure 819 | 0.2 | 0.2 | 0.2 |
| Sartomer SR238 | 0.5 | 0.5 | 0.5 |
| Expancel DU091/80 | 3.0 | 3.0 | 3.0 |
| Density, gm/cc | 0.54 | 0.56 | 0.48 |

## Claims

1. A thermoplastic gel composition that may be crosslinked by exposure to radiation comprising:
(a) from 5 to 40 weight percent of a crosslinkable block copolymer selected from the group consisting of
(A-HD)ₓ-Y-(UD)_{z} (II)
or
(UD-A-HD)ₓ-Y (III)
or
((UD)_{y}-A-HD)ₓ-Y-(UD)_{z} (IV)
wherein A is a vinyl aromatic hydrocarbon block having a molecular weight of from 4,000 to 30,000, HD is a hydrogenated conjugated diene block having a molecular weight of from 10,000 to 100,000, Y is a multifunctional coupling agent, UD is a conjugated diene block having a molecular weight of from 1,000 to 80,000 or a conjugated diene block having a molecular weight of from 1,000 to 80,000 which has been partially hydrogenated, x is an integer from 1 to 20, y is 0 or 1, z is an integer from 1 to 20 and in formulas (II) and (IV) x+z ranges from 2 to 30;
(b) from 60 to 90 weight percent of a liquid component selected from extending oils, plasticizers and solvents which are compatible with the crosslinkable block copolymer;
(c) from 1 to 20 weight percent of at least one crosslinker selected from difunctional or multifunctional acrylate or methacrylate monomers and vinyl ethers;
(d) optionally from 0 to 10 weight percent expandable microspheres; and
(e) optionally from 0 to 3 weight percent of a photoinitiator
wherein the total of all components equals 100 weight percent.

2. A thermoplastic gel composition according to Claim 1 wherein the block copolymer is selected from:
(S-EB)ₓ-Y-(I)_{z} (V)
or
(I-S-EB)ₓ-Y (VI)
or
((I)_{y}-S-EB)ₓ-Y-(I)_{z} (VII)
wherein S is a polystyrene block, EB is a hydrogenated polybutadiene polymer block wherein the 1,2-vinyl content of the butadiene polymer block prior to hydrogenation is between 30 and 80 mol percent, I is a polyisoprene polymer block or a polyisoprene polymer block which has been partially hydrogenated, Y is a coupling agent residue, x is an integer from 1 to 20, y is 0 or 1, z is an integer from 1 to 20 and in formulas (V) and (VII) x+z ranges from 2 to 30.

3. A thermoplastic gel composition according to Claim 1 or 2 wherein the value of x is 2 and the value of z is 2.

4. A thermoplastic gel composition according to any one of Claims 1 to 3 wherein the component (b) is selected from white mineral oils, paraffinic / naphthenic extending oils, synthetic or naturally occurring esters, ethers and alcohols, and hydrocarbon or oxygenated hydrocarbon solvents, preferably paraffinic / naphthenic extending oils.

5. A thermoplastic gel composition according to any one of Claims 1 to 4 wherein the crosslinker is a difunctional acrylate monomer, preferably hexane diol diacrylate.

6. A thermoplastic gel composition according to any one of Claims 1 to 6, wherein the composition contains expandable microspheres in an amount from 0.1 to 10 weight percent, preferably from 1 to 5 weight percent.

7. A thermoplastic gel composition according to any one of Claims 1 to 6 wherein the photoinitiator is present in an amount from 0.1 to 3 weight percent and is selected from benzoin ethers, substituted acetophenones and benzophenones, substituted benzil-ketals, bis acyl phosphine oxides, alpha hydroxy ketones, alpha amino ketones and blends of these types, preferably bis acyl phosphine oxides.

8. A thermoset article comprising the thermoplastic gel composition of any one of Claims 1 to 7 which has been subjected to ionizing radiation, preferably electron beam radiation, or non-ionizing radiation, preferably ultraviolet light or visible light, for a time and under conditions sufficient to convert the thermoplastic article to a thermoset article.

9. A thermoset article according to Claim 8 wherein the thermoset article is selected from clear candles, air fresheners, soft rubber gaskets, cushions, mattresses and pillows.

10. A thermoplastic gel composition that may be crosslinked by exposure to radiation comprising:
(a) from 5 to 40 weight percent of mixture of a crosslinkable block copolymer of the formula
(S-B)ₓ-Y-(B)_{y} (I)
wherein S is a polystyrene polymer block, B is a polybutadiene polymer block having a 1,2-vinyl content of between 10 and 80 mol percent, Y is a coupling agent residue, x is an integer from 1 to 20, preferably 2, y is an integer from 0 to 20, preferably 2, and wherein x+y ranges from 2 to 30, and a polystyrene - hydrogenated polybutadiene - polystyrene block copolymer wherein the ratio of block copolymer of formula (I):polystyrene-hydrogenated polybutadiene-polystyrene block copolymer is from 3:1 to 1:3;
(b) from 60 to 90 weight percent of a liquid component selected from extending oils, plasticizers and solvents which are compatible with the crosslinkable block copolymer;
(c) from 1 to 20 weight percent of at least one crosslinker selected from difunctional or multifunctional acrylate or methacrylate monomers and vinyl ethers;
(d) from 0.1 to 10 weight percent expandable microspheres; and
(e) from 0 to 3 weight percent of a photoinitiator
wherein the total of all components equals 100 weight percent.

## Patentansprüche

1. Thermoplastische Gelzusammensetzung, die durch Bestrahlung vernetzt sein kann, umfassend:
(a) 5 bis 40 Gew.-% eines vernetzbaren Blockcopolymers, der aus der aus
(A-HD)ₓ-Y-(UD)_{z} (II)
oder
(UD-A-HD)ₓ-Y (III)
oder
((UD)_{y}-A-HD)ₓ-Y-(UD)_{z} (IV)
bestehenden Gruppe ausgewählt ist, worin A ein vinylaromatischen Kohlenwasserstoffblock mit einem Molekulargewicht von 4000 bis 30.000 ist, HD ein hydrierter konjugierter Dienblock mit einem Molekulargewicht von 10.000 bis 100.000 ist, Y ein mehrfunktionelles Kupplungsmitel ist, UD ein konjugierter Dienblock mit einem Molekulargewicht von 1000 bis 80.000 oder ein konjugierter Dienblock mit einem Molekulargewicht von 1000 bis 80.000 ist, der teilweise hydriert worden ist, x eine ganze Zahl von 1 bis 20 ist, y 0 oder 1 ist, z eine ganze Zahl von 1 bis 20 ist und in den Formeln (II) und (IV) x+z im Bereich von 2 bis 30 ist;
(b) 60 bis 90 Gew.-% einer flüssigen Komponente, die unter Extenderölen, Weichmachern und Lösungsmitteln ausgewählt ist, die mit dem vernetzbaren Blockcopolymer verträglich sind;
(c) 1 bis 20 Gew.-% mindestens eines Vernetzers, der unter bifunktionellen oder mehrfunktionellen Acrylat- oder Methacrylatmonomeren und Vinylethern ausgewählt ist;
(d) gegebenenfalls 0 bis 10 Gew.-% schaumfähige Mikrokügelchen; und
(e) gegebenenfalls 0 bis 3 Gew.-% eines Fotoinitiators,
wobei die Gesamtheit aller Bestandteile 100 Gew.-% ausmacht.

2. Thermoplastische Gelzusammensetzung nach Anspruch 1, worin das Blockcopolymer ausgewählt ist unter
(S-EB)ₓ-X-(I)_{z} (V)
oder
(I-S-EB)ₓ-Y (VI)
oder
((I)_{y}-S-EB)ₓ-Y-(I)_{z} (VII)
worin S ein Polystyrolblock ist, EB ein hydrierter Polybutadienpolymerblock ist, worin der 1,2-Vinylgehalt des Butadienpolymerblocks vor der Hydrierung zwischen 30 und 80 Mol-% ist, I ein Polyisoprenpolymerblock oder ein Polyisoprenpolymerblock ist, der teilweise hydriert worden ist, Y ein Kupplungsmittelrest ist, x eine ganze Zahl von 1 bis 20 ist, y 0 oder 1 ist, z eine ganze Zahl von 1 bis 20 ist und in den Formeln (V) und (VII) x+z im Bereich von 2 bis 30 ist.

3. Thermoplastische Gelzusammensetzung nach Anspruch 1 oder 2, worin x 2 ist und z 2 ist.

4. Thermoplastische Gelzusammensetzung nach einem der Ansprüche 1 bis 3, worin die Komponente (b) ausgewählt ist unter weißen Mineralölen, paraffinischen/naphthenischen Extenderölen, synthetischen oder natürlich vorkommenden Estern, Ethern und Alkoholen, und Kohlenwasserstofflösungsmitteln und Lösungsmitteln von oxidierten Kohlenwasserstoffen, vorzugsweise paraffinische/naphthenische Extenderöle.

5. Thermoplastische Gelzusammensetzungen nach einem der Ansprüche 1 bis 4, worin der Vernetzer ein bifunktionelles Acrylatmonomer ist, vorzugsweise Hexandioldiacrylat.

6. Thermoplastische Gelzusammensetzung nach einem der Ansprüche 1 bis 6, worin die Zusammensetzung schaumfähige Mikrokügelchen in einer Menge von 0,1 bis 10 Gew.-%, vorzugsweise 1 bis 5 Gew.-% enthält.

7. Thermoplastische Gelzusammensetzung nach einem der Ansprüche 1 bis 6, worin der Fotoinitiator in einer Menge von 0,1 bis 3 Gew.-% vorhanden ist und ausgewählt ist unter Benzoinethern, substituierten Acetophenonen und Benzophenonen, substituierten Benzilketalen, Bisacylphosphinoxiden, ä-Hydroxyketonen, á-Aminoketonen und Gemischen dieser Arten, vorzugsweise Bisacylphosphinoxide.

8. Wärmehärtbarer Gegenstand, der die thermoplastische Gelzusammensetzung nach einem der Ansprüche 1 bis 6 enthält, die einer ionisierenden Bestrahlung, vorzugsweise einer Elektronenstrahlbestrahlung, oder einer nichtionisierenden Bestrahlung, vorzugsweise einer Bestrahlung mit UV-Licht oder sichtbarem Licht, über einen Zeitraum und unter Bedingungen ausgesetzt worden ist, die ausreichen, um den wärmehärtenden Gegenstand in einen wärmegehärteten Gegenstand umzuwandeln.

9. Wärmehärtbarer Gegenstand nach Anspruch 8, wobei der wärmehärtbare Gegenstand ausgewählt ist unter klaren Kerzen, Lufterfrischern, Weichgummidichtungen, Polstern, Matratzen und Kissen.

10. Thermoplastische Gelzusammensetzung, die durch Bestrahlung vernetzt sein kann, umfassend:
(a) 5 bis 40 Gew.-% eines Gemisches eines vernetzbaren Blockcopolymers der Formel
(S-B)ₓ-Y-(B)_{y} (I)
worin S ein Polystyrolpolymerblock ist, B ein Polybutadienpolymerblock mit einem 1,2-Vinylgehalt zwischen 10 und 80 Mol-% ist, Y ein Kupplungsmittelrest ist, x eine ganze Zahl von 1 bis 20, vorzugsweise 2 ist, y eine ganze Zahl von 0 bis 20, vorzugsweise 2 ist, und worin x+y im Bereich von 2 bis 30 liegt, und
eines Polystyrol-hydriertes Polybutadien-Polystyrolblockcopolymers, worin das Verhältnis des Blockcopolymers der Formel (I): Polystyrol-hydriertes Polybutadien-Polystyrolblockcopolymer 3:1 bis 1:3 ist;
(b) 60 bis 90 Gew.-% einer flüssigen Komponente, ausgewählt unter Extenderölen, Weichmachern und Lösungsmitteln, die mit dem vernetzbaren Blockcopolymer verträglich sind;
(c) 1 bis 20 Gew.-% mindestens eines Vernetzers, ausgewählt unter bifunktionellen oder mehrfunktionellen Acrylat- oder Methacrylatmonomeren und Vinylethern;
(d) 0,1 bis 10 Gew.-% schaumfähige Mikrokügelchen; und
(e) 0 bis 3 Gew.-% eines Fotoinitiators,
wobei die Gesamtheit aller Komponenten 100 Gew.-% ist.

## Revendications

1. Une composition de gel thermoplastique qui peut être réticulé par exposition à un rayonnement comprenant :
(a) entre 5 et 40 pour cent en poids d'un copolymère à blocs pouvant être réticulé sélectionné dans le groupe consistant en
(A-HD)ₓ-Y-(UD)_{z} (II)
ou
(UD-A-HD)ₓ-Y (III)
ou
((UD)_{y}-A-HD)ₓ-Y-(UD)_{z} (IV)
dans lequel A est un bloc d'hydrocarbure aromatique vinylique ayant un poids moléculaire compris entre 4000 et 30 000, HD est un bloc diène conjugué hydrogéné ayant un poids moléculaire compris entre 10 000 et 100 000, Y est un agent de couplage multifonctionnel, UD est un bloc diène conjugué ayant un poids moléculaire compris entre 1000 et 80 000 ou un bloc diène conjugué ayant un poids moléculaire compris entre 1000 et 80 000 qui a été partiellement hydrogéné, x est un entier compris entre 1 et 20, y est égal à 0 ou 1, z est un entier compris entre 1 et 20 et dans les formules (II) et (IV) x+z est compris entre 2 et 30 ;
(b) entre 60 et 90 pour cent en poids d'un composant liquide sélectionné parmi des huiles plastifiantes, des plastifiants et des solvants qui sont compatibles avec le copolymère à blocs pouvant être réticulé ;
(c) entre 1 et 20 pour cent en poids d'au moins un réticulant sélectionné parmi des monomères d'acrylate ou de méthacrylate difonctionnel ou multifonctionnel et des éthers de vinyle ;
(d) facultativement entre 0 et 10 pour cent en poids de microsphères expansibles ; et
(e) facultativement entre 0 et 3 pour cent en poids d'un photo-initiateur
dans laquelle le total de tous les composants est égal à 100 pour cent en poids.

2. Une composition de gel thermoplastique selon la revendication 1, dans laquelle le copolymère à blocs est sélectionné parmi :
(S-EB)ₓ-Y-(I)_{z} (V)
ou
(I-S-EB)ₓ-Y (VI)
ou
((I)_{y}-S-EB)ₓ-Y-(I)_{z} (VII)
dans laquelle S est un bloc polystyrène, EB est un bloc de polymère de polybutadiène hydrogéné dans lequel la teneur en 1,2-vinyl du bloc de polymère de butadiène avant hydrogénation est comprise entre 30 et 80 pour cent molaire, I est un bloc de polymère de polyisoprène ou un bloc de polymère de polyisoprène qui a été partiellement hydrogéné, Y est un résidu d'agent de couplage, x est un entier compris entre 1 et 20, y est égal à 0 ou 1, z est un entier compris entre 1 et 20 et dans les formules (V) et (VII) x+z est compris entre 2 et 30.

3. Une composition de gel thermoplastique selon la revendication 1 ou 2, dans laquelle la valeur de x est 2 et la valeur de z est 2.

4. Une composition de gel thermoplastique selon l'une quelconque des revendications 1 à 3, dans laquelle le composant (b) est sélectionné parmi des huiles minérales blanches, des huiles plastifiantes paraffiniques / naphténiques, des esters synthétiques ou naturels, des alcools et des éthers, et des solvants d'hydrocarbures ou d'hydrocarbures oxygénés, de préférence des huiles plastifiantes paraffiniques / naphténiques.

5. Une composition de gel thermoplastique selon l'une quelconque des revendications 1 à 4, dans laquelle le réticulant est un monomère d'acrylate difonctionnel, de préférence un diacrylate d'hexane diol.

6. Une composition de gel thermoplastique selon l'une quelconque des revendications 1 à 6, dans laquelle la composition contient des microsphères expansibles en quantité comprise entre 0,1 et 10 pour cent en poids, de préférence entre 1 et 5 pour cent en poids.

7. Une composition de gel thermoplastique selon l'une quelconque des revendications 1 à 6, dans laquelle le photo-initiateur est présent en quantité comprise entre 0,1 et 3 pour cent en poids et est sélectionné parmi des éthers de benzoïne, des benzophénones et des acétophénones substitués, des ketal benzil substitués, des oxydes de bis acylphosphines, des alpha-hydroxy cétones, des alpha-amino cétones, et des mélanges de ces types, de préférence des oxydes de bis acylphosphines.

8. Un article thermodurci comprenant la composition de gel thermoplastique selon l'une quelconque des revendications 1 à 7, qui a été soumis à un rayonnement ionisant, de préférence un rayonnement d'un faisceau d'électron, ou un rayonnement non ionisant, de préférence de la lumière ultraviolette ou de la lumière visible, pendant une durée et dans des conditions suffisantes pour convertir l'article thermoplastique en un article thermodurci.

9. Un article thermodurci selon la revendication 8, dans lequel l'article thermodurci est sélectionné parmi des bougies translucides, des désodorisants d'air, des joints en caoutchouc souple, des coussins, des matelas et des oreillers.

10. Une composition de gel thermoplastique qui peut être réticulé par exposition à un rayonnement comprenant :
(a) entre 5 et 40 pour cent en poids d'un mélange d'un copolymère à blocs pouvant être réticulé de formule
(S-B)ₓ-Y-(B)_{y} (I)
dans laquelle S est un bloc de polymère polystyrène, B est un bloc de polymère de polybutadiène ayant une teneur en 1,2-vinyl comprise entre 10 et 80 pour cent molaire, Y est un résidu d'agent de couplage, x est un entier compris entre 1 et 20, de préférence 2, y est un entier compris entre 0 et 20, de préférence 2, et dans lequel x+y est compris entre 2 et 30, et un copolymère à blocs de polystyrène - polybutadiène hydrogéné - polystyrène dans lequel le rapport copolymère à blocs de formule (I) : copolymère à blocs de polystyrène - polybutadiène hydrogéné - polystyrène est compris entre 3:1 et 1:3 ;
(b) entre 60 et 90 pour cent en poids d'un composant liquide sélectionné parmi des huiles plastifiantes, des plastifiants et des solvants qui sont compatibles avec le copolymère à blocs pouvant être réticulé ;
(c) entre 1 et 20 pour cent en poids d'au moins un réticulant sélectionné parmi des monomères d'acrylate ou de méthacrylate difonctionnel ou multifonctionnel et des éthers de vinyle ;
(d) entre 0,1 et 10 pour cent en poids de microsphères expansibles ; et
(e) entre 0 et 3 pour cent en poids d'un photo-initiateur
dans laquelle le total de tous les composants est égal à 100 pour cent en poids.
